# EUROPÄISCHE PATENTSCHRIFT

(11) **EP 4 020 103 B1**
(45) Veröffentlichungstag und Bekanntmachung des Hinweises auf die Patenterteilung: **20.03.2024**
(21) Anmeldenummer: 22155440.5
(22) Anmeldetag: 17.07.2018
(51) Int. Cl.: G05B 19/042, G05B 19/418, G06F 9/445, G06F 9/4401

(54) **VERFAHREN UND INDUSTRIEANLAGE ZUM VERWALTEN UND STEUERN VON PRODUKTIONSMITTELN**
METHOD AND INDUSTRIAL PLANT FOR MANAGING AND CONTROLLING PRODUCTION RESOURCES
PROCÉDÉ DE GESTION ET INSTALLATION INDUSTRIELLE DE COMMANDE DE MOYENS DE PRODUCTION

(30) Priorität: 28.07.2017 AT 506302017
(43) Veröffentlichungstag der Anmeldung: 29.06.2022
(62) Teilanmeldung aus: 18752671.0
(73) Patentinhaber: Wittmann Technology GmbH, 1220 Wien (AT)
(72) Erfinder: Rella, Johann, 2671 Payerbach (AT); Wittmann, Michael Peter, 2100 Leobendorf (AT)
(74) Vertreter: Felfernig, Oliver

(56) Entgegenhaltungen:
- DE-A1-102009 045 386
- DE-T2- 69 933 895
- US-A1- 2015 100 674

## Beschreibung

Die Erfindung betrifft ein Verfahren zum Verwalten und Steuern von Produktionsmitteln sowie einer Industrieanlage bzw. Produktionssystem, wie es in den Oberbegriffen der Ansprüche 1 und 12 beschrieben ist.

Es sind bereits Verfahren zur Vernetzung von Industrieanlagen bekannt, bei denen die einzelnen Produktionsmaschinen, wie beispielsweise eine Spritzgießmaschine, ein Temperiergerät, ein Granulat-Trockner, usw. vernetzt werden. Dabei werden die einzelnen Geräte von einem Netzwerkspezialisten mit einem Netzwerk verbunden, worauf der Netzwerkspezialist an diesen Geräten notwendige Einstellungen vornimmt, im Besonderen auch eine entsprechende Adresse zuteilt. Anschließend ist es erforderlich, dass ein weiterer Fachmann die einzelnen Geräte konfiguriert und interne Kommunikationsverbindungen herstellt, sodass diese untereinander kommunizieren können.

Nachteilig ist hierbei, dass bei einem derartigen Vorgehen eine rasche Umrüstung nicht möglich ist und die Produktion zum Anbinden oder Entfernen eines neuen Gerätes gestoppt werden muss. Durch die Aufnahme der Produktionsmittel bzw. der Arbeitszellen in das Netzwerk, insbesondere in ein Intranet und/oder Internet, werden diese auch sicherheitstechnischen Gefahren im Netzwerk ausgesetzt.

In der DE 69933895 T2 ist ein geschlossenes Feldbus-Netzwerk beschrieben, insbesondere ein Verfahren und eine Vorrichtung zum Betrachten von Daten in einem Prozesssteuerungsnetz. Dabei sind eine Vielzahl von nicht autark arbeitende Einrichtungen über einen Feldbus kommunikativ gekoppelt, wobei eine Datenerfassung am Bus erfolgt, bei der mitgelesen wird und wenig aktiv abgefragt wird. Weiters wird von einer Linkmastereinrichtung (LAS) eine Liste sämtlicher Einrichtungen gespeichert, wobei über die Linkmastereinrichtung (LAS) ständig nach neuen Einrichtungen, die an ein Bussegment angeschlossen werden, gescannt wird. In den einzelnen Bussegmenten sind weitere Linkmastereinrichtungen (LAS) angeordnet. Ferner speichert jede Linkmastereinrichtung (LAS) an jedem Bussegment eine "aktuelle Liste", die eine Liste sämtlicher Einrichtungen ist, die mit diesem Segment des Busses verbunden sind. Die Liste wird lediglich an der entsprechenden Linkmastereinrichtung (LAS) des Bussegments verwaltet und nicht an die Einrichtungen gesendet, da die Einrichtungen untereinander durch Konfiguration/Verdrahtung ohne Liste kommunizieren können.

Der wesentliche Nachteil liegt darin, dass nur die Linkmastereinrichtungen Listen der in den Bussegmenten genutzten Einrichtungen halten, die Einrichtungen selbst die Liste aber nicht übersendet bekommen. Die Einrichtungen in den einzelnen Bussegmenten selbst halten diese Liste somit nicht und verwenden die Liste nicht, um eine interne Kommunikation herzustellen. Die Liste wird in der D1 dazu erstellt, um eine Prozessvisualisierung, insbesondere ein Verfahren zum Betrachten von Daten in einem Prozesssteuerungsnetz, zu erstellen. Die erstellten Listen werden nur in den jeweiligen Linkmastereinrichtungen (LAS) gehalten und werden nicht an die Einrichtungen gesendet/kommuniziert. Sie dienen demnach auch nicht dazu, um direkte Kommunikation zwischen den Einrichtungen herzustellen. Die direkte Kommunikation der Einrichtungen wird ermöglicht, in dem der Prozess-Ingenieur manuell eine solche konfiguriert. Diese direkte Kommunikation ist demnach starr und kann sich nicht von selbst an geänderte Gegebenheiten anpassen. Automatisiert erfasst werden Änderungen im Bus-Segment von den Linkmastereinrichtung (LAS) nur zum Zwecke der Betrachtung von Daten in dem Prozesssteuerungsnetz, das verteilte Steuerfunktionen hat. Die verteilten Steuerfunktionen werden aber von der LAS und einer von dieser erstellten Liste nicht beeinflusst.

Weiters beschreibt die DE 69933895 T2 ein Betrachtungsprozessfunktionsmodul, dass in einer Prozesssteuereinrichtung implementiert ist. Ein derartiges Betrachtungsprozessfunktionsmodul kann nur insofern mit einer Anwendung in der Kunststoffindustrie verglichen werden, als es auch auf Daten in einem verteilten und sich dynamisch ändernden Netzwerk zugreift. Um auf die Teilnehmer durchzugreifen, bedient sich das Betrachtungsprozessfunktionsmodul der Intelligenz von Linkmastern, welche Teilnehmer über Adressenpolling in einem Subnetz erkennt und zugänglich macht.

In der EP 1524566 A1 ist ein Steuerverfahren für eine Produktionsmaschine, insbesondere eine Werkzeugmaschine, beschrieben, die mehrere für den Betrieb der Werkzeugmaschine notwendige Komponenten, wie eine Ein- u. Ausgabegruppe, einen Motor, einen Sensor, usw., aufweist. Die Komponenten sind dabei mit einer zentralen Steuerung verbunden, die die externe Kommunikation durchführt. Dabei ist jeder Komponente eine spezielle Linkadresse entweder direkt oder in Parameterdaten hinterlegt, sodass bei der Inbetriebnahme der Produktionsmaschine automatisiert die Parameterdaten abgerufen werden, so dass eine plug & play-Funktionalität realisierbar ist.

Nachteilig ist hierbei, dass die plug & play Funktion lediglich für die Inbetriebnahme der Anlage zum Konfigurieren der nicht eigenständig arbeitenden Komponenten funktioniert und bei einem Tausch einer Komponente, die neu eingesetzte Komponente funktionskompatibel zur ausgetauschten Komponente sein muss. Des Weiteren muss für einen Tausch die Werkzeugmaschine gestoppt und somit die Produktion unterbrochen werden.

Aus der DE 102011082962 A1 ist ein System und Verfahren zum Bereitstellen eines Steuerungsprogrammcodes zur Steuerung eines Gerätes bekannt, welches an ein Steuerungsgerät angeschlossen ist, wobei mit einem Authentisierungsservice nach erfolgreicher Authentisierung des Gerätes eine Geräte-ID übertragen wird. In Abhängigkeit der Geräte-ID des authentisierten Gerätes wird ein Steuerungsprogrammcode an ein Steuergerät übertragen, welche das authentisierte Gerät steuert.

Eine Vorrichtung zur Konfiguration von Ethernet-Geräten und ein Verfahren zur Konfiguration von Ethernet-Ausrüstung unter Verwendung einer solchen Vorrichtung ist aus der US 2015/100674 A1 bekannt.

Die US2015100674A1 beschreibt eine Vorrichtung zur Konfiguration von Ethernet-Geräten, bei der jede Geräteeinheit einen Ethernet-Anschluss aufweist und die Vorrichtung einen Ethernet-Gegenstecker umfasst, wobei die Vorrichtung ein Erfassungsmittel, das in der Lage ist die Verbindung der Vorrichtung mit einer entsprechenden Geräteeinheit zu erfassen, und ein Zuordnungsmittel, das in der Lage ist, nach der Erfassung der besagten Verbindung der Geräteeinheit eine eindeutige IP-Adresse zuzuweisen mit dem das Gerät verbunden ist, wobei die eindeutige IP-Adresse in den Referenznetzwerkeinstellungen enthalten ist, die dazu bestimmt sind, in die entsprechende Geräteeinheit heruntergeladen zu werden, umfasst.

Nachteilig ist hierbei, dass die Geräte untereinander nicht bekannt gemacht werden. Die Liste der genutzten und verbleibenden nutzbaren IP-Adressen wird nicht an die Geräte übersendet.

Aus der DE102009045386A1 ist ein Verfahren zum Betreiben eines Feldbus-Interface beschrieben, bei dem das Feldbus-Interface an einem Feldbus der Prozessautomatisierungstechnik angeschlossen ist, wobei vom Feldbus-Interface kontinuierlich der Datenverkehr am Feldbus abgehört wird. Weiters werden die mitgehörten Informationen an eine übergeordnete Steuerung, die an einem LAN-Netz hängt weitergeleitet. Dabei wird eine Liste der am Feldbus hängenden Geräte erstellt und an die übergeordnete Steuerung kommuniziert.

Nachteilig ist hierbei, dass die Liste nicht von den am Feldbus hängenden Geräten untereinander genützt wird.

Aufgabe der Erfindung ist es daher ein Verfahren und eine Einrichtung der eingangs genannten Art zu schaffen, mit der einerseits diverse Produktionsmittel zu einer Arbeitszelle verbunden werden können, eine sichere Datenkommunikation mit externen Komponenten außerhalb der Arbeitszelle möglich ist und/oder andererseits eine einfache Kommunikation der Produktionsmittel untereinander möglich ist. Eine weitere Aufgabe liegt darin, dass eine schnelle und einfache Anpassung der Arbeitszellen ermöglicht wird.

Die Aufgabe wird durch die Erfindung gelöst.

Die erfindungsgemäße Einrichtung ist dadurch gekennzeichnet, dass beim Anbinden eines Produktionsmittels an das Produktionsmittel-Netzwerk das Produktionsmittel automatisch von der Arbeitszellensteuerung erkannt wird und von der Arbeitszellensteuerung eine Adresse zugeordnet bekommt, und entsprechende Software-Applikationen und/oder Einstellmöglichkeiten bzw. Funktionen betreffend des erkannten Produktionsmittels geladen und/oder aktiviert werden, und an das erkannte Produktionsmittel oder an bereits vorhandene Produktionsmittel für den notwendigen Betrieb der Arbeitszelle übersendet werden, worauf die Arbeitszellensteuerung einerseits die Kommunikation bzw. den Datenaustausch mit dem Netzwerk durchführt, und andererseits über das Produktionsmittel-Netzwerk mit den Produktionsmitteln in der Arbeitszelle kommuniziert und weiters die Arbeitszellensteuerung direkte Kommunikation der Produktionsmittel in der Arbeitszelle untereinander vermittelt wobei die Arbeitszellensteuerung eine Liste bzw. ein Arbeitszellenverzeichnis mit zumindest den Adressen der in der Arbeitszelle erkannten Produktionsmittel und Funktionen hält und diese Liste an die Produktionsmittel verteilt oder die Produktionsmittel diese Liste in vorzugsweise regelmäßigen Abständen von der Arbeitszellensteuerung abfragen, wobei durch die Verteilung der Liste jedes Produktionsmittel die in seiner Arbeitszelle vorhandenen Produktionsmittel erkennen kann und einen Datenaustausch über das Produktionsmittel-Netzwerk durchführt..

Vorteilhaft ist hierbei, dass durch das automatische selbstständige Erkennen von neu hinzugefügten oder entfernten Geräten, insbesondere Produktionsmitteln, und der daraus geschaffenen Liste bzw. dem Arbeitszellenverzeichnis eine einfache Verwaltung und Einbindung ermöglicht wird, da die einzelnen Geräte in der Arbeitszelle die vorhandenen Funktionen und Einstellmöglichkeiten kennen. Auch wird dadurch der Datenaustausch untereinander und mit anderen Geräten aus einer anderen Arbeitszelle und mit beispielsweise einem MES-System oder einer Smart-Phone App wesentlich vereinfacht, da jedes Gerät einfach über die Liste die Zuordnung der Geräte, deren Adresse und deren Funktion entnehmen kann.

Das Arbeitszellenverzeichnis steht über das betriebsinterne Netzwerk auch einer übergeordneten Software, insbesondere einem MES- oder ERP-System zur Verfügung, wobei sich die logische Zuweisung von Produktionsmitteln zur Arbeitszelle aus der Zusammenstellung der jeweiligen Liste automatisch ergibt. Dadurch wird ein sogenanntes "Plug and Produce" geschaffen, bei dem nur mehr das Gerät über vorzugsweise eine einzige Leitung angeschlossen wird, worauf alle weiteren Schritte automatisch vorgenommen werden.

Somit ist erstmals eine einfache und zu jeder Zeit änderbare Zusammenstellung einer Arbeitszelle ohne IT-spezifische Konfigurationen, wie dies aus dem Stand der Technik bekannt ist, möglich, d.h., dass beispielsweise eine Arbeitszelle bestehend aus einer Spritzgießmaschine und einem Temperiergerät einfach mit einem neuen Trockner oder einem Trockner aus einer anderen Arbeitszelle ergänzt werden kann, da das Verarbeitungsgerät, insbesondere die Spritzgießmaschine, mit Hilfe des Arbeitszellenverzeichnisses, insbesondere der neu generierten Liste, die erforderlichen zusätzlichen Informationen für den Aufbau der Kommunikation zu den neu angeschlossenen Komponenten herstellen kann. Auch ist es damit möglich, dass einfach eine Komponente aus der Arbeitszelle entfernt werden kann, was wiederum automatisch von der Arbeitszellensteuerung erkannt wird, in dem diese Komponente von der Arbeitszellensteuerung aus dem Arbeitszellenverzeichnis entfernt wird und somit deren Funktionen deaktiviert werden. Vorteilhaft ist aber auch, dass einfache Anbindungen bzw. Änderungen der Arbeitszellen ohne speziell ausgebildete Fachkräfte durchgeführt werden können. Dies ist insofern möglich, da von der Arbeitszellensteuerung die Adressierung und Einbindung der Produktionsmittel in die Arbeitszelle durchgeführt wird und gleichzeitig die benötigte Software für den Betrieb und die Einstellmöglichkeiten, sowie den Datenaustausch mit den weiteren in der Arbeitszelle befindlichen Produktionsmitteln vermittelt oder geladen werden.

Beim Stand der Technik ist ein derartiges Hinzufügen einer Komponente zu einer Arbeitsgruppenzelle bestehend aus zumindest einer Spritzgießmaschine nur derart möglich, dass zuerst eine netzwerktechnische Einbindung durch eine Fachkraft mit einem Netzwerkspezialisten stattfindet und anschließend in einer übergeordneten MES- oder ERP-Software, eine Zuweisung der Komponente zu beispielsweise dieser Spritzgießmaschine manuell erfolgen muss, sodass eine softwaretechnische Anpassung bzw. Integration mit einem IT-Fachmann notwendig ist, was bei der erfindungsgemäßen Lösung nicht notwendig ist.

Ein weiterer Vorteil liegt darin, dass eine einfache Anbindung bzw. Änderung der Arbeitszellen ohne speziell ausgebildete Fachkräfte durchgeführt werden kann. Dies ist insofern möglich, da von der Arbeitszellensteuerung die Adressierung der Komponenten durchgeführt wird und vorzugsweise auch die benötigte Software für den Betrieb und die Einstellmöglichkeiten, sowie den Datenaustausch mit den weiteren in der Arbeitszelle befindlichen Komponenten geladen werden.

Beim Stand der Technik ist ein derartiges Hinzufügen einer Komponente bzw. eines Produktionsmittels zu einer Arbeitszelle bestehend aus zumindest einer Spritzgießmaschine nur derart möglich, dass zuerst eine netzwerktechnische Einbindung durch eine Fachkraft stattfindet und anschließend in einer übergeordneten Software, im Besonderen einem MES- oder ERP-System eine Zuweisung der Komponente zu beispielsweise dieser Spritzgießmaschine manuell erfolgen muss, worauf anschließend der Anlagenuser die produktionsspezifischen Einstellungen durchführen kann.

Dadurch wird also erreicht, dass es für die Produktionsmittel einer Arbeitszelle jederzeit einfach möglich ist, auf die anderen Komponenten der Arbeitszelle zuzugreifen und die Kommunikation durchzuführen. Des Weiteren erlaubt das Arbeitszellenverzeichnis der jeweiligen Arbeitszellensteuerung einen Zugriff von einer übergelagerten Software auf alle Funktionalitäten der einzelnen Komponenten in der Arbeitszelle. Mit Hilfe der Geräteliste und den jeweiligen Funktionalitäten der Geräte ist es auch einfach möglich, dass weitere Informationen, Prozessdaten, Status, usw. von der zentralen Arbeitszellensteuerung aus nach außen kommuniziert wird, was die Überwachung und somit die Sicherheit wesentlich verbessert.

Von Vorteil sind die Maßnahmen, bei denen an der jeweiligen Arbeitszellensteuerung ein Kommunikationsmittel bzw. Verteiler angeschlossen wird, an das/den die Produktionsmittel verbunden werden.

Dadurch wird erreicht, dass die Arbeitszellensteuerung nur eine geringe überschaubare Anzahl an Arbeitszellen-Ein- u/o Ausgängen aufweisen kann, jedoch jede Arbeitszelle an sich eine entsprechend hohe Anzahl von Produktionsmitteln aufweisen kann. Vorzugsweise weisen die Arbeitszellensteuerung und die Kommunikationsmittel vier bis sieben, insbesondere sieben Ein- u/o Ausgänge bzw. Steckplätze oder Kommunikationsports für die interne Kommunikation und jeweils einen Ein- u/o Ausgang bzw. Steckplatz oder Kommunikationsports für die externe Kommunikation auf. Selbstverständlich ist es aber möglich, dass auch an den Einu/o Ausgängen der Kommunikationsmittel wiederum ein weiteres Kommunikationsmittel angeschlossen werden, sodass die Anzahl der möglichen Produktionsmittel beliebig erweiterbar ist.

Es sind aber auch die Maßnahmen von Vorteil, bei denen von der jeweiligen Arbeitszellen-steuerung Daten von den Produktionsmitteln der Arbeitszelle gesammelt werden, die je nach Adressierung/Geräteliste/Zuordnung und/oder Sicherheitsstandard von der Arbeitszellensteuerung nach außen an das Netzwerk weitergegeben werden, ohne dass ein vorhandenes MES- und/oder ERP-System oder übergeordnete Software direkt auf die Produktionsmittel durchgreifen muss. Dadurch wird erreicht, dass von der Arbeitszellensteuerung zwar Daten von den Arbeitszellen bzw. den Produktionsmittel nach außen in ein übergeordnetes Netzwerk, wie beispielsweise das Intranet oder Internet, weitergeleitet werden, jedoch jeglicher Zugriff von außen aus dem Netzwerk an die Arbeitszellen bzw. an die einzelnen Produktionsmittel verhindert, insbesondere geblockt, wird. Somit wird die höchstmögliche Sicherheit für die Industrieanlage, insbesondere für die Produktion erreicht.

Somit ist es nicht mehr möglich, dass ein ständiger bzw. kontinuierlicher, insbesondere direkter, Datenfluss mit einem übergeordneten Medium, insbesondere dem Internet, aufgebaut und zustande kommt, was für schädliche Angriffe mit Viren oder anderer Schadsoftware sehr vorteilhaft ist, wenn ein kontinuierlicher, insbesondere direkter, Datentransfer stattfindet.

Weiters ist es möglich, dass durch Weiterleitung der Daten, insbesondere der Liste mit den vorhandenen Produktionsmitteln von einer geeigneten Software bzw. APP ein virtuelles Abbild des Produktionsablaufes bzw. Produktionsabbild erstellt werden kann.

Vorteilhaft sind aber auch die Maßnahmen, bei denen die von der jeweiligen Arbeitszellensteuerung gesammelten Daten von einem internen Bereich mit den Produktionsmitteln in einen externen Bereich für übergeordnete Medien, gespiegelt werden.

Dadurch wird erreicht, dass keinerlei Verbindungen nach außen gebildet werden, sodass keine schädliche Software eindringen kann. Dabei ist es möglich, dass die Daten doppelt (einmal im internen Bereich und einmal im externen Bereich) durch Spiegelung vorhanden sind, sodass eine Art galvanische Trennung geschaffen wird.

Es sind die Maßnahmen von Vorteil, bei denen von der jeweiligen Arbeitszellensteuerung eine Abschirmung/Trennung oder Abschottung und Überwachung des Datentransfers vorgenommen wird, sodass ein direkter Datentransfer zu den Komponenten von außerhalb der Arbeitszelle nur mit einer Freigabe durch die Arbeitszellensteuerung oder einem im Produktionsmittel vorhandenen Freigabekey oder manuell über einen User ermöglicht wird.

Dies wird dadurch erreicht, dass ein Sicherheitsmodul in der Arbeitszellensteuerung angeordnet ist, in dem eine eigenentwickelte oder zugekaufte Firewall eingesetzt werden kann, sodass ein kostengünstiger Aufbau und Einsatz sowie ein sicherer Betrieb der Anlage gewährleistet ist, da das Sicherheitsmodul unabhängig vom Betrieb der Produktionsmittel immer auf Letztstand gehalten werden kann.

Dabei wird sogar empfohlen, dass eine automatische Update-Durchführung des Sicherheitsmoduls selbstständig von der Arbeitszellensteuerung initiiert und durchgeführt wird, um immer auf dem Letztstand bei der Bekämpfung von Viren, Malware und sonstigen Schadsoftware zu sein.

Durch die Abschirmung der Produktionsmittel über die Arbeitszellensteuerung wird erreicht, dass bei einem Befall des betriebsinternen Netzwerks (Intranet) mit schädlicher Software oder einem teilweisen Ausfall der Arbeitszellensteuerung diese zwar außer Betrieb ist bzw. genommen werden kann, jedoch die Produktionsmittel der Arbeitszelle autark weiterarbeiten können. Insbesondere wird durch den Einsatz der Kommunikationsmittel in den Arbeitszellen erreicht, dass über das Kommunikationsmittel ein arbeitszellenweiter Datentransfer gewährleistet bleibt, sodass bei Ausfall der Arbeitszellensteuerung lediglich der Datentransfer nach außen, also zur übergeordneten Software, insbesondere einem MES- oder ERP-System, nicht funktioniert.

Vorteilhaft sind auch die Maßnahmen, bei denen das Entfernen eines Produktionsmittels aus der Arbeitszelle, also wenn dieses von der jeweiligen Arbeitszellensteuerung bzw. dem Kommunikationsmittel abgeschlossen wird, automatisch von der Arbeitszellensteuerung erkannt wird, worauf die dem entfernten Produktionsmittel zugehörigen Funktionen in dieser Arbeitszelle von der Arbeitszellensteuerung deaktiviert werden.

Dadurch wird erreicht, dass damit sofort alle Einstellungsmöglichkeiten betreffend das entfernte Produktionsmittel deaktiviert werden, sodass keinerlei Fehleinstellungen oder -Zuweisungen vorgenommen werden können, die ev. zu fehlerhaften Produktionsabläufen oder zum Stillstand der Anlagen führen. Dies ist insofern wichtig, da oftmals ein Datenaustausch der Produktionsmittel untereinander verlangt wird, sodass beispielsweise ein Produktionsmittel auf eine Antwort des entfernten Produktionsmittels wartet, sodass die Funktionalität der gesamten Arbeitszelle nicht mehr gewährleistet werden kann.

Es sind aber auch die Maßnahmen von Vorteil, bei denen mehrere Arbeitszellensteuerungen mit einer übergeordneten Software verbunden werden, wobei die übergeordnete Software eine gemeinsame Geräteauflistung bzw. Liste mit vorzugsweise einer Gruppenabbildung der einzelnen Arbeitszellen, erstellt bzw. von den jeweiligen Arbeitszellensteuerungen übersendet werden und von der übergeordneten Software zu einer gemeinsamen Geräteauflistung und Gruppenabbildung zusammengefügt werden.

Dadurch ist es möglich, dass damit eine übergeordnete Stelle geschaffen wird, in der alle wesentlichen Daten gesammelt werden, von der auch überwacht und verwaltet wird, wenn einzelne Komponenten einer Arbeitszelle in eine andere Arbeitszelle verschoben werden oder in einer Arbeitszelle neue Komponenten hinzugefügt werden.

Es sind auch die Maßnahmen von Vorteil, bei denen ein oder alle Produktionsmittel derart ausgebildet werden, dass sich diese speziell an der Arbeitszellensteuerung authentifizieren, sodass diese nach außen, also vom externen Netzwerk (Intranet), direkt auf sich selbst einen Pfad freischalten können.

Üblicherweise erlaubt die Standardkonfiguration der Arbeitszellensteuerung nur die Kommunikation der Komponenten untereinander und von außen den Zugriff auf das Datenabbild der Arbeitszellensteuerung, jedoch keinen Datenaustausch direkt mit den Produktionsmitteln. Wenn sich eine Komponente als gültige Arbeitszellenkomponente authentifizieren kann, dann kann sie von innen nach außen kommunizieren bzw. kann ihr auf eigenes Risiko hin auch Zugriff von außen auf sich selbst ermöglicht werden, indem entsprechende Regeln in der Arbeitszellensteuerung automatisch, d.h. ohne IT-Techniker, eingerichtet werden. Dadurch kann auch eine Spiegelung der Bedieneroberfläche zu Servicezwecken geschaffen werden. Wesentlich ist hierbei jedoch, dass eine externe Überwachung für Servicezwecke durchgeführt werden kann, d.h., dass der Hersteller beispielsweise die Hub-Anzahl der Verarbeitungsmittel ausliest und aufgrund der durchgeführten Hübe oder Anzahl der Formöffnungsbewegungen usw., das Serviceintervall anpasst.

Von Vorteil sind die Maßnahmen, bei denen die authentifizierten Produktionsmittel Verbindungen zu Geräten und/oder Software bzw. App's außerhalb der Arbeitszelleaufnehmen können.

Dadurch können vom Hersteller beispielsweise entsprechende Software-Updates für die Produktionsmittel durchgeführt werden.

Vorteilhaft sind auch die Maßnahmen, bei denen die jeweilige Arbeitszellensteuerung einen direkten Zugriff auf die Komponenten unterbindet, sondern nur einen Zugriff auf ein Datenbild gestattet.

Dadurch kann von extern, insbesondere über das Internet, über eine App bzw. Software ein virtuelles Datenabbild eingeholt werden, da dieses von der Arbeitszellensteuerung übermittelt wird. Wird jedoch versucht, direkt auf eine Komponente bzw. Produktionsmittel zuzugreifen, so wird dies von der Arbeitszellensteuerung geblockt. Dabei ist es möglich, dass die Anfrage an einen User, insbesondere den Produktionsleiter, per SMS-Nachricht oder Messenger-Dienste, wie beispielsweise Whats-App, usw. an dessen Handy oder dessenComputer übermittelt wird, sodass dieser die Möglichkeit hat, diese eine Anfrage oder auch zukünftige Anfragen freizugeben.

Weiters ist eine Maßnahme von Vorteil, bei der nicht authentifizierte Produktionsmittel keine Verbindung über die Arbeitszellensteuerung nach außen oder innen aufnehmen können.

Dadurch wird erreicht, dass nicht zugelassene Geräte nicht in die Arbeitszelle integriert werden können, da deren Sicherheitsstandard vom Hersteller nicht überprüft werden kann.

Weiters wird die Aufgabe der Erfindung aber auch durch eine Industrieanlage bzw. ein Produktionssystem eingerichtet zum Durchführen des Verfahrens nach einem der Ansprüche 1 bis 11 gelöst.

Vorteilhaft ist hierbei, dass durch die Erstellung einer Liste mit den wichtigsten Daten, insbesondere einer Adresse und dem dazugehörigen Produktionsmittel und vorzugsweise mit Funktionen, eine einfache Verwaltung und Datenaustausch ermöglicht wird.

Es ist auch die Ausbildung von Vorteil, bei der die Arbeitszellensteuerung zum Laden und/oder Aktivieren von Software-Applikationen und/oder Einstellmöglichkeiten und/oder Funktionen betreffend das neu erkannte Produktionsmittel ausgebildet ist. Dadurch wird erreicht, dass vom Bedienpersonal keine Fachkenntnis für das Einrichten von Geräten erforderlich ist, sondern diesem sämtliche Funktionen und Einstellmöglichkeiten automatisch eingestellt werden.

Schließlich ist eine Ausbildung von Vorteil, bei der der jeweiligen Arbeitszellensteuerung ein Modul zur Abschirmung einer Kommunikation des angeschlossenen Netzwerkes zu den angeschlossenen Komponenten angeordnet ist. Dadurch wird erreicht, dass eine sichere und einfache Erkennung der Produktionsmittel ermöglicht wird.

Die Erfindung wird an Hand mehrerer in den Zeichnungen dargestellter Ausführungsbeispiele näher erläutert.

Es zeigen:
- Fig. 1: ein Übersichtbild einer kunststoffverarbeitenden Industrieanlage, in vereinfachter, schematischer Darstellung;
- Fig. 2: eine schematische Darstellung eines Aufbaus einer Arbeitszellensteuerung für den Einsatz in einer Industrieanlage gemäß Fig. 1, in vereinfachter, schematischer Darstellung.

Einführend sei festgehalten, dass in den unterschiedlichen Ausführungsformen gleiche Teile mit gleichen Bezugszeichen bzw. gleichen Bauteilbezeichnungen versehen werden, wobei die in der gesamten Beschreibung enthaltenen Offenbarungen sinngemäß auf gleiche Teile mit gleichen Bezugszeichen bzw. gleichen Bauteilbezeichnungen übertragen werden können. Auch sind die in der Beschreibung gewählten Lageangaben, wie z.B. oben, unten, seitlich usw. auf die beschriebene Figur bezogen und sind bei einer Lageänderung sinngemäß auf die neue Lage zu übertragen. Auch können Einzelmerkmale oder Merkmalskombinationen aus den gezeigten und beschriebenen Ausführungsbeispielen für sich eigenständige erfinderische Lösungen darstellen.

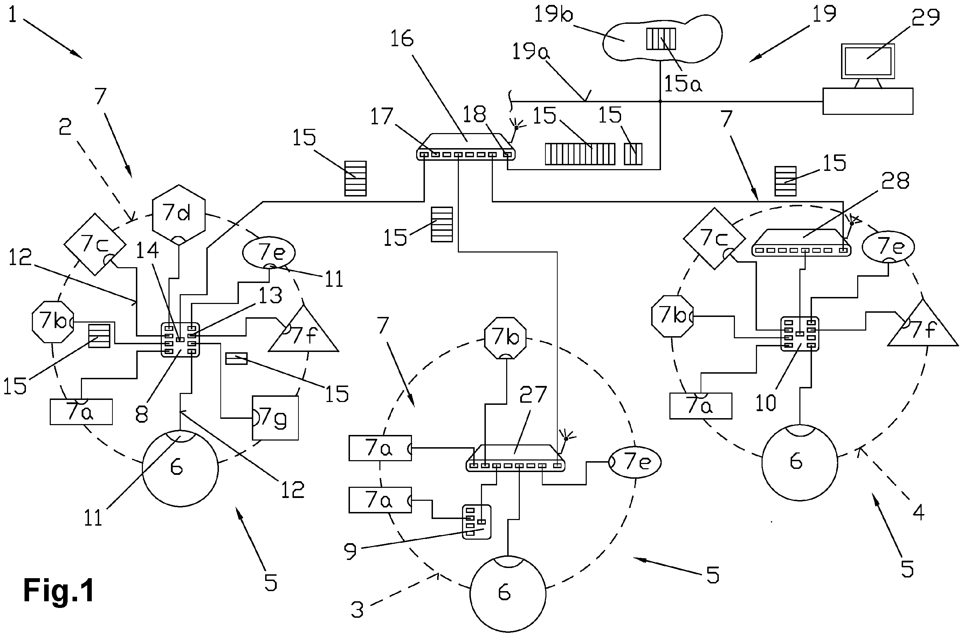

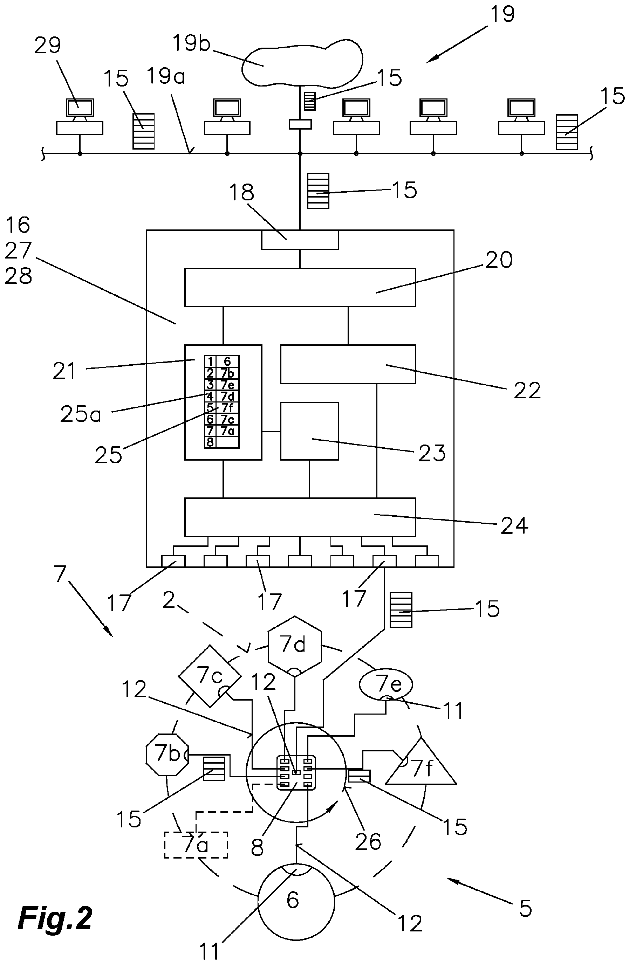

Grundsätzlich ist zu den Ausführungsbeispielen der Fig. 1 und 2 zu erwähnen, dass der Einsatz vorzugsweise in einer kunststoffverarbeiteten Industrie 1 bzw. Industrieanlagen 1 erfolgt.

In den Fig. 1 und 2 ist die Industrieanlage 1 mit einer oder mehreren Arbeitszellen 2 bis 4 gezeigt, wobei gewisse Produktionsmittel 5 in den Arbeitszellen 2 bis 4 organisiert sind. Die Produktionsmittel 5 bestehen vorzugsweise aus zumindest einer Verarbeitungsmaschine 6 der kunststoffverarbeitenden Industrie 1, insbesondere einer Spritzgießmaschine 6 und mindestens einem Peripheriegerät 7 Die Peripheriegeräte 7 können beispielsweise aus einem Temperiergerät 7a, einem Roboter bzw. Entnahmeroboter 7b, einem Dosiergerät 7c für Granulat, einem Granulat-Trockner 7d, einem Granulat-Fördergeräte 7e, einem Kamerasystem 7f für die Qualitätskontrolle, einem automatischen Durchflussregler 7g usw. gebildet sein, wie dies schematisch dargestellt ist. Dabei ist es möglich, dass mehrere gleichartige Produktionsmittel 5 in einer Arbeitszelle 2 bis 4 angeordnet sind und verwaltet werden.

Bei dem dargestellten Ausführungsbeispiel der Fig. 1 sind die Produktionsmittel 5 in einer Arbeitszelle 2 bis 4 mit einem Kommunikationsmittel 8 bis 10, insbesondere einem Switch 8 bis 10, verbunden, d.h., dass jedes Verarbeitungsgerät 6 und Peripheriegerät 7 vorzugsweise zur besseren Erkennung mit einem hardware- oder softwaremäßig ausgebildeten Kommunikations- und/oder Erkennungsmodul 11 ausgestattet ist. Die Produktionsmittel 5 sind über eine Leitung, insbesondere ein handelsübliches Schnittstellenkabel 12, mit jeweils einem Ein-/Ausgang 13 am Kommunikationsmittel 8 bis 10 verbunden, wobei auch eine drahtlose Verbindung beispielsweise per WLAN möglich wäre. Dabei ist es möglich, dass das Kommunikationsmittel 8 bis 10 mehrere, insbesondere sieben Ein-/Ausgänge 13 aufweist, wobei jedoch unterschiedliche Ausführungen von Kommunikationsmitteln 8 bis 10 mit mehr oder weniger Ein-/Ausgängen 13 eingesetzt werden können. Auch ist es möglich, dass kein Kommunikationsmittel zum Einsatz kommt und das Verarbeitungsgerät 6 und die Peripheriegeräte 7 direkt an einer Arbeitszellensteuerung 27,28 angeschlossen wird, wie dies in der Arbeitszelle 3 dargestellt ist.

Ebenso ist es möglich, dass mehrere derartige Kommunikationsmittel 8 bis 10 in einer Arbeitszelle 2 bis 4 angeordnet sind, d.h., dass bei vollständiger Belegung der Ein-/Ausgänge 13 mit zumindest einem Verarbeitungsgerät 6 und Peripheriegeräte 7, ein Peripheriegerät 7 abgesteckt wird und an dessen Ein-/Ausgang 13 ein weiteres Kommunikationsmittel 8 bis 10 angesteckt wird, worauf auf diesen weiteren Kommunikationsmitteln 13 dieses angesteckt wird und somit noch weitere Verarbeitungsgeräte 6 und/oder Peripheriegeräte 7 an den freien Ein-/Ausgängen 13 des neu hinzugefügten Kommunikationsmittels 8 bis 10 angesteckt werden können. Wie aus Fig. 1 ersichtlich, ist es möglich, dass die einzelnen Arbeitszellen 2 bis 4 unterschiedlich ausgestattet sind, d.h., dass jede Arbeitszelle 2 bis 4 eine verschiedene Anzahl an Produktionsmittel 5 aufweist.

Des Weiteren weist das Kommunikationsmittel 8 bis 10 einen Kommunikations-Einu/o -Ausgang 14 auf, an dem eine Arbeitszellensteuerung 16 oder 27,28 angeschlossen wird. Dieser Anschluss dient für die Kommunikation bzw. den Datenaustausch 15, insbesondere von der Weiterleitung und dem Empfang von Datenpaketen bzw. Datensätzen 15, wie schematisch dargestellt, an die Arbeitszellensteuerung 27,28 bzw. möglicherweise an eine übergeordnete Stelle, beispielsweise der Arbeitszellensteuerung 16, ein vorzugsweise betriebsinternen Netzwerk 19, insbesondere einem Intranet 19a und/oder dem Internet 19b. Grundsätzlich ist zu erwähnen, dass die Arbeitszellensteuerungen 27,28 wiederum an eine übergeordnete Arbeitszellensteuerung 16 angeschlossen werden, um weitere hierarchische Arbeitszellenstrukturen in einer Industrieanlage 1 zu erzeugen.

Bei einer derartigen Industrieanlage 1 arbeitet jede Arbeitszelle 2 bis 4 unabhängig von den anderen Arbeitszellen 2 bis 4, d.h., dass in jeder Arbeitszelle 2 bis 4 immer jene Produktionsmittel 5 eingesetzt sind, die für die Herstellung eines bestimmten Produktes benötigt werden. Beispielsweise könnte bei der dargestellten Industrieanlage 1 in der Arbeitszelle 2 ein Werkzeug für einen Spritzgießartikel eingesetzt sein, das für die Temperierung ein Temperiergerät 7a benötigt, für die schonende Entnahme einen Roboter 7b, für die richtige Zusammensetzung der zu verarbeitenden Kunststoffgranulate ein Dosiergerät 7c, für die Trocknung des Kunststoffgranulats einen Trockner 7d, für die Förderung des Granulats zur Plastifizier- und Einspritzeinheit der Verarbeitungsmaschine ein Fördergerät 7e, für die Kontrolle des fertigen Produktes ein Kamerasystem 7f und für die automatische Durchflusskontrolle durch das Werkzeug einen Durchflussregler 7g. In der Arbeitszelle 3 und 4 werden jeweils weniger Peripheriegeräte für die Produktion benötigt.

Dadurch ist es notwendig, dass der flexible und produktabhängige Betrieb einer derartige Industrieanlage 1 sichergestellt wird und keinen externe Gefahren ausgesetzt wird, um großen Schaden für den Hersteller, insbesondere einen Betriebsausfall der Industrieanlage 1, zu vermeiden. Damit dies möglich ist, ist die Arbeitszellensteuerung 16, 27,28, wie in Fig. 2 dargestellt ausgestattet.

Die Arbeitszellensteuerung 16, 27,28 weist ein Sicherheits- und Überwachungsmodul 20 auf, das mit dem Netzwerk-Ein- u/o Ausgang 18 verbunden ist und mit vorzugsweise einer LAN-Schnittstelle für das betriebsinterne Netzwerk 19 oder anderen Arbeitszellensteuerungen 16,27,28 ausgebildet ist. Das Sicherheits- und Überwachungsmodul 20 ist einerseits mit einem Vergabemodul 21 (Routing core and Portforwarding) und andererseits mit einem Servermodul 22 verbunden. Weiters ist in der Arbeitszellensteuerung 16, 27,28 noch ein Plug und Produktionsmodul 23 angeordnet, welches mit dem Vergabemodul 21 verbunden ist. Das Vergabemodul 21, das Servermodul und das Plug und Produktionsmodul 23 sind mit einem weiteren Sicherheits- und Überwachungsmodul 24 verbunden, an dem die Arbeitszellen-Einu/o Ausgänge 17, die wiederum in Form von handelsüblichen LAN-Schnittstellen gebildet sind, angeschlossen sind.

Weiters ist in Fig. 2 dargestellt, wie an einem Arbeitszellen-Ein- u/o Ausgang 17 ein Kommunikationsmittel 8, mit den daran angeschlossenen Produktionsmitteln 5 verbunden ist.

Erfindungsgemäß ist nunmehr vorgesehen, dass einerseits die Betriebssicherheit der Industrieanlage 1 erhöht wird und Produktionsmittel 5 von der Arbeitszellensteuerung 16, 27,28 von den externen Gefahren, wie beispielsweise Viren, Malware, und andere Schadsoftware, schadlos gehalten wird und andererseits eine einfache Anpassung der einzelnen Arbeitszellen 2 bis 4 möglich ist.

Dazu ist die Arbeitszellensteuerung 16, 27,28 derart ausgebildet, dass die Produktionsmittel 5 automatisch von der Arbeitszellensteuerung 16, 27,28 erkannt werden, worauf die Arbeitszellensteuerung 16, 27,28 einerseits die Kommunikation bzw. den Datenaustausch mit dem vorzugsweise betriebsinternen Netzwerk 19, insbesondere einem Intranet 19a und/oder dem Internet 19b, oder anderen Arbeitszellensteuerungen 16,27,28 und andererseits mit den Produktionsmitteln 5 der Arbeitszelle 2 bis 4 und die Produktionsmittel 5 untereinander durchführt, wobei während des Betriebes der Arbeitszelle 2 bis 4 in der Arbeitszellensteuerung 16, 27,28 ein Softwareupdate 15a (wie in Fig. 1 schematisch dargestellt), wie strichliert im Netzwerk 19, insbesondere im Internet 19b, dargestellt, durchgeführt werden können. D.h., dass beim Verbinden einer Verarbeitungsmaschine 6 und/oder eines Peripheriegerätes 7 an den Ein-/Ausgängen 13 oder den Arbeitszellen-Ein- u/o Ausgängen 17 dies über das Plug- und Produktionsmodul 23 erkannt wird, worauf ein Datenaustausch zwischen dem neu angeschlossenen Produktionsmittel 5 und dem Plug- und Produktionsmodul 23 durchgeführt wird, bei dem vom Produktionsmittel 5 über das Kommunikations- u/o Erkennungsmodul 11 seine Daten zum Zuordnen übersendet wird, d.h., dass diese derart ausgebildet werden, dass sie automatisch von der Arbeitszellensteuerung 16, 27,28 erkannt werden, wozu die Produktionsmittel 5 mit einer entsprechende Software u/o Hardware, insbesondere dem hardware- oder softwaremäßig aufgebauten Kommunikations- und/oder Erkennungsmodul 11, ausgestattet sind. Dabei ist es möglich, dass vom neu angeschlossenen Produktionsmittel 5 oder von der Arbeitszellensteuerung 16,27,28 aus dem Netzwerk 19 oder einem verbundenen Speicher ein internes SoftwareUpdate 15a u/o. Software Applikationen u/o Einstellmöglichkeiten u/o Funktionen betreffend des neu hinzugefügten Produktionsmittel 5 geladen und, wenn notwendig, an die weiteren bereits angeschlossenen Produktionsmittel 5 verteilt werden. Durch das automatische Erkennen und Updaten der neu hinzukommenden Funktionen wird eine einfache und schnelle Anpassung der Arbeitszelle 2 bis 4 erreicht.

Beispielsweise wird in der Arbeitszelle 2 ein neues Temperiergerät 7a (wie mit strichlierten Linien in Fig. 2 dargestellt) mit erhöhtem Temperaturbereich für die Werkzeugtemperierung des Werkzeugs in der eingesetzten Verarbeitungsmaschine 6, insbesondere der Spritzgießmaschine, hinzugefügt, also an das Kommunikationsmodul 8 durch einfaches Anstecken über ein Schnittstellenkabel 12 angeschlossen. Daraufhin erkennt dies das Plug- und Produktionsmodul 23 der Arbeitszellensteuerung 27,28 bzw. 16, da diese in regelmäßigen Abständen die Kommunikationsmodule 8 bis 10 und ihre eigenen Ein- und/oder Ausgänge 17 kontaktiert bzw. eine Abfrage durchführt, worauf nunmehr vorzugsweise von dem neuen Temperiergerät 7a eine für diese Gerätekonfiguration zugeordnete Kennung bzw. Code an das Plug- und Produktionsmodul 23 übersendet. Das Plug- und Produktionsmodul 23 beispielsweise überprüft nunmehr den übersendeten Code mit hinterlegten Codes und erkennt anschließend, dass in der Arbeitszelle 2 ein Temperiergerät 7a hinzugefügt wurde, sodass dieses die Information an das Verwaltungsmodul 21 weiterleitet.

Vom Verwaltungsmodul 21 wird dem neu hinzugefügten Produktionsmittel 5, insbesondere dem Temperiergerät 7a, eine Adresse 25a zugeteilt, die über das Sicherheits- und Überwaschungsmodul 24, die den Datenverkehr auf Viren und Schadsoftware überprüft, an das neu hinzugefügte Produktionsmittel 5 gesendet wird. Gleichzeitig nimmt das Verwaltungsmodul 21 das Produktionsmittel 5, insbesondere das neu hinzugefügte Temperiergerät 7a, in eine Liste 25 bzw. ein Arbeitszellenverzeichnis 25, wie schematisch dargestellt, aller vorhanden Produktionsmittel 5 auf, d.h., dass beim Anbinden eines Produktionsmittels 5 mit einer Arbeitszellensteuerung 16, 27,28 oder einem Kommunikationsmodul 8 bis 10 die Produktionsmittel 5 von der Arbeitszellensteuerung 16,27,28 eine Adresse 25a zugeordnet bekommen und die Arbeitszellensteuerung 16,27,28 eine Liste 25 der im Produktionsmittel-Netzwerk 26 vorhandenen Geräte bzw. Produktionsmittel 5 hält und an die Geräte verteilt oder die Geräte diese Liste 25 bzw. das Arbeitszellenverzeichnis 25 in vorzugsweise regelmäßigen Abständen von der Arbeitszellensteuerung 16,27,28 abfragen werden. Durch die Bildung der Liste 25 kann jedes Produktionsmittel 5 die in seiner Arbeitszelle 2 bis 4 vorhandenes Produktionsmittel 5 einfach erkennen und einen Datenaustausch über das Produktionsmittel-Netzwerk 26 durchführen.

Die Liste 25 bzw. das Arbeitszellenverzeichnis 25 kann mehrere Informationen, wie beispielsweise eine Adresse, einen Gerätetyp, mögliche Funktionen bzw. Sonderfunktionsinformationen, usw. beinhalten.

Wesentlich bei der erfindungsgemäßen Industrieanlage 1 ist, dass das Hinzufügen bzw. Trennen von Produktionsmittel 5 von jedermann vorgenommen werden kann, sodass keine Fachkräfte, wie IT-Spezialisten zum Anbinden ans Netzwerk u/o Fachpersonal zur Konfiguration der Funktionen usw., benötigt werden, da von der Arbeitszellensteuerung 16,27,28 eine ev. benötigte Software-Applikation geladen wird und/oder benötigte Einstellmöglichkeiten und Ablaufsteuerungen von dieser oder dem dazugehörigen Verarbeitungsgerät 6 freigegeben werden. Somit kann sofort nach dem Verbinden eines neuen Produktionsmittel 5 zu einer Arbeitszelle 2 bis 4 die entsprechenden Einstellungen/Funktionen an den dazugehörigen Verarbeitungsgerät 6 und den Peripheriegeräten 7 vorgenommen werden. Dabei ist es selbstverständlich möglich, dass die einzelnen Geräte untereinander noch mechanisch verbunden werden können.

Ebenso wird von der Arbeitszellensteuerung 16,27,28, insbesondere vom Plug- und Produktionsmodul 23, das Entfernen eines Produktionsmittel 5 aus einer Arbeitszelle 2 bis 4 erkannt, worauf das Gerät aus der Liste 25 entfernt und weitere notwendige Schritte vorgenommen werden, d.h., dass beim Entfernen einer Komponente aus der Arbeitszelle 2 bis 4, also von den Arbeitszellensteuerungen 16,27,28 abgeschlossen wird, dies automatisch von der entsprechenden Arbeitszellensteuerung 16,27,28 erkannt wird, worauf deren Funktionen und/oder Software-Applikationen in dieser Arbeitszelle 2 bis 4 von der Arbeitszellensteuerung 16,27,28 u/o vorzugsweise dem Verarbeitungsgerät 6 deaktiviert werden. Dabei ist es wesentlich, dass von der Arbeitszellensteuerung 16,27,28 bzw. dem Verarbeitungsgerät 6 sämtliche Verknüpfungen des entfernten Gerätes zur Produktionslinie deaktiviert oder ersetzt werden, sodass es zu keinem Produktionsstillstand kommt, wenn ev. andere Produktionsmittel 5 auf Rückmeldungen von den entfernten Gerät warten, was durch das nicht vorhanden sein des Gerätes zu einem Produktionsstillstand führen kann. Dabei ist es auch möglich, dass von der Arbeitszellensteuerung 16,27,28 nach dem Entfernen eines Peripheriegerätes 7 diese den Produktionsablauf in dieser Arbeitszelle 2 bis 4 überwacht, sodass nach Auftreten einer Anfrage oder Rückfrage, beispielsweise Rücklauftemperatur bei einem Temperiergerät 7a, an die Adresse des entfernten Gerätes dies von der Arbeitszellensteuerung 16,27,28 erkannt wird und durch entsprechend hinterlegte Ersatzschritte, ersetzt werden. Die Überwachung kann dabei für einen oder mehrere hintereinander durchgeführte Produktionsabläufe erfolgen, worauf der Überwachungsmodus wieder deaktiviert wird. Dabei ist es auch möglich, dass derartige Sonderfreigaben gesammelt werden und von der Arbeitszellensteuerung 16,27,28 über das Netzwerk 19 an entsprechende Stellen weitergeleitet werden, sodass diese sogenannten Fehlermeldungen behoben werden können.

Auch ist es möglich, was bei derartigen Industrieanlagen 1 oftmals vorkommt, dass einzelne Peripheriegeräte 7 von einer Arbeitszelle 2 bis 4 in eine andere Arbeitszelle 2 bis 4 verschoben werden, was aufgrund des erfindungsgemäßen Aufbaus einfach ohne Fachpersonal möglich ist, da von der Arbeitszellensteuerung 16,27,28 das Peripheriegerät 7 in der einen Arbeitszelle 2 bis 4 deaktiviert wird und aus der Liste 25 entfernt wird, worauf beim Anbinden bzw. Koppeln in einer anderen Arbeitszelle 2 bis 4 von der entsprechenden Arbeitszellensteuerung 16,27,28 dieses als neues Gerät erkannt wird und wiederum in die jeweilige Liste 25 mit Zuordnung der neuen Arbeitszelle 2 bis 4 aufgenommen wird.

Die Liste 25 wird von der Arbeitszellensteuerung 16,27,28 an die einzelnen Produktionsmittel 5 verteilt, sodass jedes Gerät sämtliche Daten bzw. Funktion der im Betrieb befindlichen Geräte erhält. Vorzugsweise fragen jedoch die Produktionsmittel 5, insbesondere die Verarbeitungsmaschine 6, die Liste 25 in regelmäßigen Abständen von der Arbeitszellensteuerung 16,27,28 ab, da diese sämtliche Informationen für den Produktionsablauf benötigt, um diesen ev. anpassen zu können. Beim Einsatz mehrere Arbeitszellensteuerungen 16,27,28 ist es möglich, dass die Liste 25 von nur einer Arbeitszellensteuerung 16,27,28 verwaltet wird.

Weiters ist es auch möglich, dass eine Bedienoberfläche des neu hinzugefügten oder aller Produktionsmittels 5 auf dem Terminal der Verarbeitungsmaschine 6, insbesondere der Spritzgießmaschine, dargestellt werden kann, sodass alle Produktionsmittel zusätzlich von diesem zentralen Terminal aus bedient werden können. Dadurch ist es möglich, dass Softwarekomponenten in die Verarbeitungsmaschine 6, insbesondere der Spritzgießmaschine, geladen werden können, die Daten von den Produktionsmitteln 5 einholen, sodass die Parameter von allen Komponenten, die für die Qualität der Teile wichtig sind, zentral in einer Tabelle auf der Verarbeitungsmaschine 6, insbesondere der Spritzgießmaschine, mitgeloggt werden können. Beispielsweise können die Produktionsparameter für die in der Verarbeitungsmaschine 6, insbesondere der Spritzgießmaschine, eingebaute Form (Produkt) an einer zentralen Stelle hinterlegt werden können und von dort aus an alle Komponenten verteilt werden. Vorteilhaft ist hierbei, wenn die Hinterlegung in der Verarbeitungsmaschine 6 beispielsweise einer Spritzgießmaschine oder dem MES-System erfolgt. Es kann somit geprüft werden, ob alle Komponenten, die zur Produktion des Produkts in die Arbeitszelle 2 bis 4 eingebracht worden sein müssen, tatsächlich auch in der Arbeitszelle 2 bis 4 vorhanden sind. Man kann also sagen, dass mehrere Arbeitszellensteuerungen 16,27,28 mit einer übergeordneten Software insbesondere einem MES- oder ERP-System oder einer übergeordneten Arbeitszellensteuerung 16,27,28, verbunden werden bzw. diese in der Arbeitszellensteuerung 16,27,28 installiert sind, wobei der übergeordneten Software eine gemeinsame Geräteauflistung bzw. Liste 25 mit vorzugsweise einer Gruppenabbildung der einzelnen Arbeitszellen 2 bis 4, erstellt bzw. von den einzelnen Arbeitszellensteuerungen 16,27,28 übersendet werden und zu einer gemeinsamen Geräteauflistung 25 und Gruppenabbildung 25 von der übergeordneten Software zusammengefügt wird. Somit wird in einfacher Weise erreicht, dass durch Weiterleitung der Liste 25 jeder alle Informationen zur Verfügung hat und die für ihn notwendigen Informationen herausfiltern kann.

Da es jedoch oftmals notwendig ist, dass von der Arbeitszellensteuerung 16,27,28 entsprechende Software-Applikation aus dem Netzwerk 19 geladen werden, ist es erforderlich, dass entsprechende Sicherheitsvorkehrungen getroffen werden, d.h., dass von dem Sicherheits- und Überwachungsmodul 20,24 der Datentransfer genau geregelt wird. Vorzugsweise wird eine betriebseigene Firewall in der Arbeitszellensteuerung 16,27,28 installiert und eingesetzt. Dabei ist es möglich, dass bei mehreren Arbeitszellensteuerungen 16,27,28 nur jene Arbeitszellensteuerung 16,27,28, die mit dem Netzwerk 19 verbunden ist, mit der Firewall ausgestattet ist. Auch ist es möglich, dass eine externe, insbesondere zugekaufte Firewall in die Arbeitszellensteuerung 16,27,28 integriert wird.

Die Arbeitszellensteuerung 16,27,28 ist derart ausgebildet, dass diese während des Betriebes der Arbeitszellen 2 bis 4 in der Arbeitszellensteuerung 16 ein Softwareupdate 15a durchgeführt werden kann, d.h., dass der Betrieb der Industrieanlage 1, insbesondere der Produktionsmittel 5 in den Arbeitszellen 2 bis 4 beim Durchführen eines Software-Updates diese nicht gestoppt werden müssen, da die Kommunikation untereinander über das Produktionsmittel-Netzwerk 26 uneingeschränkt weiter erfolgen kann. Somit kann die Arbeitszellensteuerung 16,27,28 immer auf den letztgültigen Sicherheitsstandard gehalten werden, sodass der bestmögliche Schutz der Anlage gewährleistet wird. Dabei ist es auch möglich, dass die Arbeitszellensteuerung 16,27,28 aufgrund von Problemen bei der Installation des Updates ausfallen kann, ohne dabei den Betrieb der Anlage zu unterbrechen. Dies ist deshalb möglich, da die Produktionsmittel 5 nach wie vor untereinander über das Produktionsmittel-Netzwerk 26 der einzelnen Arbeitszellen 2 bis 4 miteinander kommunizieren können.

Weiters ist die Arbeitszellensteuerung 16,27,28 derart ausgestattet, dass diese die Daten der Produktionsmittel 5 der Arbeitszellen 2 bis 4 sammeln. Hierzu kann die Arbeitszellensteuerung 16,27,28 einen internen oder verbundenen Speicher (nicht dargestellt) aufweisen, auf dem die Daten vorübergehend oder dauerhaft gespeichert werden. Selbstverständlich ist es aber möglich, dass die Daten beispielsweise nach Adressierung 25a / Geräteliste 25 / Zuordnung und/oder Sicherheitsstandard, von der Arbeitszellensteuerung 16,27,28 kategorisiert, werden und direkt an das Netzwerk 19 zu einer externen Komponente, beispielsweise einem Computer 29, weitergeleitet werden. Eine weitere Möglichkeit besteht darin, dass die gesammelten Daten von einem internen Bereich für die Arbeitszellen 2 bis 4 in einen externen Bereich für übergeordnete Medien bzw. das Netzwerk 19 gespiegelt werden, sodass eine sogenannte software-mäßige galvanische Trennung geschaffen wird. Dabei ist es möglich, dass die Daten in einem internen Speicher (Arbeitszellenseitig) und einen externen Speicher (Netzwerkseitig) abgelegt sind.

Die Arbeitszellensteuerung 16,27,28, insbesondere jene die mit dem externen Netzwerk 19 verbunden ist, hat die Aufgabe eine Abschirmung/Trennung oder Abschottung und Überwachung des Datentransfers 15 vorzugsweise über die Sicherheits- und Überwachungsmodule 20,24 durchzuführen bzw. ist entsprechend zur Abschirmung/Trennung oder Abschottung und Überwachung des Datentransfers 15 ausgebildet. Dabei ist ein direkter Datentransfer 15 zu den Produktionsmittel 5 von außerhalb der Arbeitszelle 2 bis 4, also vom Netzwerk 19, nur mit einer Freigabe durch die Arbeitszellensteuerung 16,27,28 oder einem im Produktionsmittel 5 vorhanden Freigabekey oder manuell über einen User möglich. D.h., dass nur unter bestimmten Umständen von der Arbeitszellensteuerung 16 ein Datentransfer 15 mit dem Verarbeitungsgerät 6 oder einem Peripheriegerät 7 zugelassen wird und sämtlich anderwärtige Versuche geblockt werden. Für die Freigabe eines direkten Zugriffes von außen, also vom Netzwerk 19, über die Arbeitszellensteuerung 16,27,28 an das Produktionsmittel 5 intern muss der Freigabekey in der Arbeitszellensteuerung 16,27,28 oder den Produktionsmittel 5 hinterlegt sein, der jederzeit von der Arbeitszellensteuerung 16,27,28 abrufbar ist.

Dabei ist es auch möglich, dass ein oder mehrere Produktionsmittel 5 derart ausgebildet sind, dass sich diese speziell an der Arbeitszellensteuerung 16,27,28 authentifizieren, wodurch von der Arbeitszellensteuerung 16,27,28 eine Verbindung für diese speziellen Produktionsmitteln 5 nach außen freischaltet. Anschließend können diese von außen, also externen Netzwerk 19, insbesondere dem Intranet 19a, direkt auf sich selbst einen Pfad, insbesondere eine Datenkommunikation 25, freischalten. Damit können diese speziell ausgestatteten Produktionsmittel 5 eine Verbindung zu Geräten und/oder Software bzw. App's außerhalb der Arbeitszelle 2 bis 4 aufnehmen.

Um die Sicherheit zu erhöhen, ist es aber möglich, dass von einem User spezielle Einstellung an der Arbeitszellensteuerung 16,27,28 vorgenommen werden können. Beispielsweise kann die Arbeitszellensteuerung 16,27,28 derart eingestellt werden, dass diese einen direkter Zugriff auf die Komponenten bzw. Produktionsmittel 5 unterbindet, sondern nur ein Zugriff auf ein Datenbild gestattet. Auch ist es möglich, dass bei einem Verbindungsversuch von Netzwerk 19 zu einem Produktionsmittel 5 oder umgekehrt, die Arbeitszellensteuerung 16,27,28 auf manuelle Freigabe eingestellt wird, sodass bei einer Verbindungsanfrage diese an einem User, insbesondere dessen Computer, Handy oder Tablett, gesendet wird, der anschließend eine manuelle Freigabe beispielsweise durch Drücken eines Bestätigungsbuttons, freigibt.

Weiters ist es möglich, dass ein physikalischer Steckplatz des Kommunikationsports, insbesondere der Ein- u/o Ausgänge 13 und/oder Netzwerk-Ein- u/o Ausgänge 17, am Kommunikationsmodul 8 bis 10 bzw. an der Arbeitszellensteuerung 16,27,28 codiert ist und somit aus der Information, wo genau auf dem Kommunikationsmodul 8 bis 10 oder Arbeitszellensteuerung 16,27,29 also ein Gerät angesteckt wurde, entsprechend "Funktionalität" geladen/konfiguriert werden. Oftmals werden beispielsweise mehrere Produktionsmittel eines bestimmten Typs (typisch Temperiergerät 7a) in einer Arbeitszelle 2 bis 8 benötigt, die entsprechend auseinander gehalten werden müssen. Die Produktionsmittel 5, insbesondere in diesem Beispiel das Temperiergerät 7a, unterscheiden sich dann eventuell nur durch die Seriennummer, sind aber in ihrer Funktion ident, bzw. unterscheiden sich die Produktionsmittel 5 im prozesstechnisch abdeckbaren Temperaturbereich. Dabei können derartige Produktionsmittel 5 mit einem weiteren Temperaturbereich auch für Arbeiten mit niedrigerem Temperaturbereich verwendet werden. Für den Prozess, insbesondere der Produktionslinie, ist wichtig zu wissen, welche Temperierschläuche / Kühlschläuche / Dosierschnecken mit dem Gerät verbunden sind. Diese Zuordnung wird beispielsweise manuell vom Bediener abgefragt, nachdem die Komponente von der Arbeitszellensteuerung 16,27,28 erkannt worden ist. Alternativ kann diese Information im Steckplatz der Arbeitszellensteuerung 16,27,28 kodiert sein, wodurch der Bediener den richtigen Steckplatz aussuchen muss, dafür aber keine weitere Frage am Bedienfeld mehr beantworten muss, wobei die hinterlegten Kodierungen einfach über das Bedienfeld abgefragt werden kann. Darüber hinaus können für eine derartige Funktion noch Sicherheitsabfragen hinterlegt sein, sodass bei falscher Verbindung diese erkannt wird und am Bedienfeld angezeigt wird. Anschließend kann der User das Gerät einfach abschließen und neu am richtigen Steckplatz verbinden. Grundsätzlich kann die Arbeitszellensteuerung 16,27,28 bzw. die Software für das Bedienfeld derart ausgebildet sein, dass nach dem Erkennen des angesteckten Produktionsmittels 5 bei falschem Steckplatz diese einen Vorschlag für den richtigen Steckplatz anzeigt.

Da bei der erfindungsgemäßen Verfahren bzw. der Industrieanlage ein sehr hoher Sicherheitsstandard gewährleistet wird, ist die Arbeitszellensteuerung 16,27,28 bevorzugt derart ausgebildet, dass ein nicht authentifiziertes Produktionsmittel 5, als ein Produktionsmittel 5 ohne der hardware- und/oder software-mäßig ausgestatteten Kommunikations- u/o Erkennungsmodul 11, keine Verbindung über das Arbeitszellensteuerung nach außen oder innen aufnehmen können. Dies sind meist Geräte von Fremdhersteller, die den Sicherheitsstandard nicht erfüllen. Um ein derartiges Geräte einzubinden, kann die Arbeitszellensteuerung 16,27,28 manuell konfiguriert werden, um zumindest einen internen Betrieb mit einem Fremdprodukt zu ermöglichen.

Wie bereits aufgezeigt ist der gravierende Vorteil dieser Einrichtung bzw. dieses Verfahren, dass einerseits während des Betriebes der Produktionsmittel die Arbeitszellensteuerungen 16,27,28 geupdatet werden können, ohne die Produktionsmittel abschalten zu müssen, sodass die Sicherheit immer auf den letztgültigen Standard gehalten werden kann und andererseits ein einfaches Verändern/Umrüsten der Arbeitszellen 2 bis 4 mit den unterschiedlichsten Produktionsmittel 5 ohne Fachpersonal durch "Plug and Produce" möglich ist, da eine automatische Erkennung erfolgt und sämtliche notwendigen Vorkehrungen, wie Software-Applikationen laden, Funktionen freischalten, usw., automatisch für die Produktionsmittel 5 von der Arbeitszellensteuerung 16,27,28 durchgeführt wird.

## Patentansprüche

1. Verfahren zum Verwalten und Steuern von Produktionsmitteln (5), die in einer oder mehreren Arbeitszellen (2 bis 4) organisiert sind, wobei sich die Arbeitszellen jeweils aus zumindest einer Verarbeitungsmaschine (6) der kunststoffverarbeitenden Industrie (1), einer Arbeitszellensteuerung, und mindestens einem Peripheriegerät (7) zusammensetzen, wobei die Peripheriegeräte (7) Temperiergeräte (7a), Roboter bzw. Entnahmeroboter (7b), Dosiergeräte (7c) für Granulat, Granulat-Trockner (7d), Granulat-Fördergeräte (7e), Kamerasysteme (7f) für die Qualitätskontrolle, automatische Durchflussregler (7g), usw. sind, wobei die Arbeitszellensteuerungen über ein Netzwerk miteinander verbunden werden, wobei die Produktionsmittel (5) innerhalb einer Arbeitszelle über ein Produktionsmittel-Netzwerk (26) mit der Arbeitszellensteuerung (16,27,28) verbunden sind, **dadurch gekennzeichnet, dass** beim Anbinden eines Produktionsmittels (5) an das Produktionsmittel-Netzwerk (26) (Seite 16, Zeile 13) das Produktionsmittel (5) automatisch von der Arbeitszellensteuerung (16,27,28) erkannt wird und von der Arbeitszellensteuerung eine Adresse (25a) zugeordnet bekommt, und entsprechende Software-Applikationen und/oder Einstellmöglichkeiten bzw. Funktionen betreffend des erkannten Produktionsmittels (5) geladen und/oder aktiviert werden, und an das erkannte Produktionsmittel (5) oder an bereits vorhandene Produktionsmittel (5) für den notwendigen Betrieb der Arbeitszelle (2 bis 4) übersendet werden, worauf die Arbeitszellensteuerung (16,27,28) einerseits die Kommunikation bzw. den Datenaustausch (15) mit dem Netzwerk (19) durchführt, und andererseits über das Produktionsmittel-Netzwerk (26) mit den Produktionsmitteln (5) in der Arbeitszelle (2 bis 4) kommuniziert und weiters die Arbeitszellensteuerung (16,27,28) direkte Kommunikation der Produktionsmittel (5) in der Arbeitszelle (2 bis 4) untereinander vermittelt wobei die Arbeitszellensteuerung (16,27,28) eine Liste (25) bzw. ein Arbeitszellenverzeichnis (25) mit zumindest den Adressen (25a) der in der Arbeitszelle (2 bis 4) erkannten Produktionsmittel (5) und Funktionen hält und diese Liste (25) an die Produktionsmittel (5) verteilt oder die Produktionsmittel (5) diese Liste (25) in vorzugsweise regelmäßigen Abständen von der Arbeitszellensteuerung (16,27,28) abfragen, wobei durch die Verteilung der Liste (25) jedes Produktionsmittel (5), die in seiner Arbeitszelle (2 bis 4) vorhandenen Produktionsmittel (5) erkennen kann und einen Datenaustausch über das Produktionsmittel-Netzwerk (26) durchführt.

2. Verfahren nach Anspruch 1, **dadurch gekennzeichnet, dass** an der jeweiligen Arbeitszellensteuerung (16, 27,28) ein Kommunikationsmittel bzw. Verteiler (8 bis 10) angeschlossen wird, an den die Produktionsmittel (5) verbunden werden.

3. Verfahren nach Anspruch 1 oder 2, **dadurch gekennzeichnet, dass** von der jeweiligen Arbeitszellensteuerung (16,27,28) Daten (15) von den Produktionsmitteln (5) der Arbeitszelle (2 bis 4) gesammelt werden, die je nach Adressierung (25a) / Geräteliste (25) / Zuordnung und/oder Sicherheitsstandard von der Arbeitszellensteuerung (16,27,28) nach außen an das Netzwerk (19) weitergegeben werden, ohne dass ein vorhandenes MES- und/oder ERP-System oder übergeordnete Software direkt auf die Produktionsmittel (5) durchgreifen muss.

4. Verfahren nach einem der Ansprüche 1 bis 3, **dadurch gekennzeichnet, dass** die von der jeweiligen Arbeitszellensteuerung (16,27,28) gesammelten Daten (15) von einem internen Bereich mit den Produktionsmitteln (5) in einen externen Bereich für übergeordnete Medien, gespiegelt werden.

5. Verfahren nach einem der vorhergehenden Ansprüche, **dadurch gekennzeichnet, dass** von der jeweiligen Arbeitszellensteuerung (16,27,28) eine Abschirmung/Trennung oder Abschottung und Überwachung des Datentransfers (15) vorgenommen wird, sodass ein direkter Datentransfer (15) zu den Produktionsmitteln (5) von außerhalb der Arbeitszelle (2 bis 4) nur mit einer Freigabe durch die Arbeitszellensteuerung (16,27,28) oder einem im Produktionsmittel (5) vorhanden Freigabekey oder manuell über einen User ermöglicht wird.

6. Verfahren nach einem der vorhergehenden Ansprüche, **dadurch gekennzeichnet, dass** ein Entfernen eines Produktionsmittels (5) aus der Arbeitszelle (2 bis 4), also wenn dieses von der jeweiligen Arbeitszellensteuerung (16,27,28) bzw. dem Kommunikationsmittel (8 bis 10) abgeschlossen wird, automatisch von der Arbeitszellensteuerung (16,27,28) erkannt wird, worauf die dem entfernten Produktionsmittel (5) zugehörigen Funktionen in dieser Arbeitszelle (2 bis 4) von der Arbeitszellensteuerung (16,27,28) deaktiviert werden.

7. Verfahren nach einem der vorhergehenden Ansprüche, **dadurch gekennzeichnet, dass** mehrere Arbeitszellensteuerungen (16,27,28) mit einer übergeordneten Software verbunden werden, wobei die übergeordnete Software eine gemeinsame Geräteauflistung bzw. Liste (25) mit vorzugsweise einer Gruppenabbildung der einzelnen Arbeitszellen (2 bis 4), erstellt bzw. von den jeweiligen Arbeitszellensteuerungen (16,27,28) übersendet werden und von der übergeordneten Software zu einer gemeinsamen Geräteauflistung und Gruppenabbildung (25) zusammengefügt werden.

8. Verfahren nach einem der vorhergehenden Ansprüche, **dadurch gekennzeichnet, dass** eine oder alle Produktionsmittel (5) derart ausgebildet werden, dass sich diese speziell an der jeweiligen Arbeitszellensteuerung (16,27,28) authentifizieren, sodass diese von außen, also dem externen Netzwerk (Intranet) (19), direkt auf sich selbst einen Pfad freischalten können.

9. Verfahren nach Anspruch 8, **dadurch gekennzeichnet, dass** die authentifizierten Produktionsmittel (5) Verbindungen zu Geräten und/oder Software bzw. App's außerhalb der Arbeitszelle (2 bis 4) aufnehmen können.

10. Verfahren nach einem der vorhergehenden Ansprüche, **dadurch gekennzeichnet, dass** die jeweilige Arbeitszellensteuerung (16, 27,28) einen direkten Zugriff auf die Komponenten bzw. Produktionsmittel (5) unterbindet, sondern nur den Zugriff auf ein Datenabbild gestattet.

11. Verfahren nach Anspruch 8, **dadurch gekennzeichnet, dass** nicht authentifizierte Produktionsmittel (5) keine Verbindung über die Arbeitszellensteuerung (16,27,28) nach außen oder innen aufnehmen können.

12. Industrieanlage (1) bzw. Produktionssystem eingerichtet zum Durchführen des Verfahrens nach einem der Ansprüche 1 bis 11.

13. Industrieanlage (1) bzw. Produktionssystem nach Anspruch 12, **dadurch gekennzeichnet, dass** der jeweiligen Arbeitszellensteuerung (16, 27,28) ein Modul zur Abschirmung einer Kommunikation des angeschlossenen Netzwerkes (19) zu den angeschlossenen Komponenten angeordnet ist.

## Claims

1. Method for managing and controlling production resources (5) organized in one or several work cells (2 to 4), whereby each of the work cells consists of at least one processing machine (6) of the plastics-processing industry (1), a work cell controller, and at least one peripheral device (7), whereby the peripheral devices (7) are temperature control devices (7a), robots or removal robots (7b), respectively, metering devices (7c) for granules, granule dryers (7d), granule conveyors (7e), camera systems (7f) for quality control (7b), metering devices (7c) for granules, granule dryers (7d), granule conveyors (7e), camera systems (7f) for quality control, automatic flow controllers (7g), etc., wherein the work cell controllers are connected to one another via a network, wherein the production resources (5) within a work cell are connected to the work cell controller (16,27,28) via a production resources network (26), **characterized in that** upon connection of a production resource (5) to the production resources network (26) (page 16, line 13), the production resource (5) is automatically detected by the work cell controller (16,27,28) and is assigned an address (25a) by the work cell controller, and corresponding software applications and/or setting options or functions, respectively, relating to the detected production resource (5) are loaded and/or activated and transmitted to the detected production resources (5) or to already existing production resources (5) for the necessary operation of the work cell (2 to 4), whereupon the work cell controller (16,27,28), on the one hand, performs communication and/or data exchange (15) with the network (19) and, on the other hand, communicates with the production resources (5) in the work cell (2 to 4) via the production resources network (26), and furthermore the work cell controller (16, 27, 28) mediates direct communication among the production resources (5) in the work cell (2 to 4) wherein the work cell controller (16,27,28) maintains a list (25) or a work cell directory (25), respectively, with at least the addresses (25a) of the functions and production resources (5) detected in the work cell (2 to 4) and distributes this list (25) to the production resources (5), or the production resources (5) query this list (25) at preferably regular intervals from the work cell controller (16,27,28), whereby the distribution of the list (25) enables each production resource (5) to detect the production resources (5) present in its work cell (2 to 4) and to carry out data exchange via the production resources network (26).

2. Method according to claim 1, **characterized in that** a means of communication or distributor (8 to 10), respectively, to which the production resources (5) are connected, is connected to the respective work cell controller (16, 27,28).

3. Method according to claim 1 or 2, **characterized in that** data (15) from the production resources (5) of the work cell (2 to 4) are collected by the respective work cell controller (16,27,28), which data, depending on addressing (25a) / device list (25) / assignment and/or security standard, are passed from the work cell controller (16,27,28) to the outside to the network (19), without an existing MES and/or ERP system or superordinate software having to directly access the production resource (5).

4. Method according to any one of claims 1 to 3, **characterized in that** the data (16,27,28) collected by the respective work cell controller (15) are mirrored from an internal area with the production resources (5) into an external area for superordinate media.

5. Method according to any one of the preceding claims, **characterized in that** the respective work cell controller (16,27,28) carries out a shielding/separation or compartmentalization and monitoring of the data transfer (15) so that direct data transfer (15) to the production resources (5) from outside the work cell (2 to 4) is enabled only upon release by the work cell controller (16,27,28) or with an authorization key present in the production resource (5), or by manual approval via a user.

6. Method according to any one of the preceding claims, **characterized in that** when a production resource (5) is removed from the work cell (2 to 4), i.e. when this is disconnected from the respective work cell controller (16,27,28) or the means of communication, respectively (8 to 10), this is automatically detected by the work cell controller (16,27,28), whereupon the functions belonging to the removed production resource (5) in this work cell (2 to 4) are deactivated by the work cell controller (16,27,28).

7. Method according to any one of the preceding claims, **characterized in that** a plurality of work cell controllers (16,27,28) are connected to a superordinate software, wherein the superordinate software creates a shared device listing or list (25), respectively, with preferably one group mapping of the individual work cells (2 to 4), or has it transmitted from the respective work cell controllers (16,27,28), respectively, and the superordinate software combines the same to form a shared device list and group mapping (25).

8. Method according to any one of the preceding claims, **characterized in that** one or all of the production resources (5) are designed in such a way that they authenticate themselves specifically with the respective work cell controller (16,27,28) so that they can activate a path directly to themselves from the outside, i.e. from the external network (intranet) (19).

9. Method according to claim 8, **characterized in that** the authenticated production resources (5) can establish connections to devices and/or software or apps, respectively, outside the work cell (2 to 4).

10. Method according to any one of the preceding claims, **characterized in that** the respective work cell controller (16, 27,28) prevents direct access to the components or production resources, respectively (5), and permits solely access to a data image.

11. Method according to claim 8, **characterized in that** unauthenticated production resources (5) cannot establish a connection to the outside or inside via the work cell controller (16,27,28).

12. Industrial installation (1) or production system, respectively, designed to carry out the method according to any one of claims 1 to 11.

13. Industrial installation (1) or production system, respectively, according to claim 12, **characterized in that** a module for shielding communication between the connected network (19) and the connected components is provided for the respective work cell controller (16, 27,28).

## Revendications

1. Procédé de gestion et de contrôle des moyens de production (5), qui sont organisés en une ou plusieurs cellules de travail (2 à 4), les cellules de travail étant composées au moins d'une machine de traitement (6) de l'industrie de traitement des matières plastiques (1), d'une commande des cellules de travail, et d'au moins un appareil périphérique (7), les appareils périphériques (7) étant des thermorégulateurs (7a), des robots ou robots de prélèvement (7b), des doseurs (7c) pour granulés, des sécheurs de granulés (7d), des convoyeurs de granulés (7e), des systèmes de caméras (7f) pour le contrôle de la qualité, des régulateurs automatiques de débit (7g), etc., les commandes de cellules de travail étant connectées entre elles par le biais d'un réseau, les moyens de production (5) au sein d'une commande de cellules de travail étant connectés à la commande de cellules de travail (16, 27, 28) par le biais d'un réseau (26) de moyens de production, **caractérisé en ce que** le moyen de production (5) est automatiquement reconnu par la commande de cellules de travail (16, 27, 28) lors de la connexion d'un moyen de production (5) au réseau (26) de moyens de production (page 16, ligne 13) et se voit attribuer une adresse (25a) par la commande de cellules de travail et des applications logicielles dédiées et/ou des possibilités de réglage ou des fonctions relatives au moyen de production (5) reconnu sont chargées et/ou activées, et sont transmises au moyen de production (5) reconnu ou au moyen de production (5) déjà existant pour le fonctionnement nécessaire de la cellule de travail (2 à 4), suite à quoi la commande de cellules de travail (16, 27, 28) exécute, d'une part, la communication ou l'échange de données (15) avec le réseau (19) et, d'autre part, avec les moyens de production (5) dans la cellule de travail (2 à 4) par le biais du réseau de moyens de production (26) et la commande de cellules de travail (16, 27, 28) établit, en outre, une communication directe entre les moyens de production (5) dans la cellule de travail (2 à 4) la commande de cellules de travail (16, 27, 28) tenant une liste (25) ou un répertoire des cellules de travail (25) avec au moins les adresses (25a) des moyens de production (5) et les fonctions reconnus dans la cellule de travail (2 à 4) et distribue cette liste (25) aux moyens de production (5) ou les moyens de production (5) consultent cette liste (25), de préférence, à intervalles réguliers à partir de la commande de cellules de travail (16, 27, 28), chaque moyen de production (5) pouvant identifier les moyens de production (5) présents dans sa cellule de travail (2 à 4) par la distribution de la liste (25) et réaliser un échange de données par le biais du réseau (26) de moyens de production.

2. Procédé selon la revendication 1, **caractérisé en ce qu'**un moyen de communication ou distributeur (8 à 10), auquel sont connectés les moyens de production (5), est connecté à la commande de cellules de travail (16, 27, 28) respective.

3. Procédé selon la revendication 1 ou 2, **caractérisé en ce que** la commande de cellules de travail (16, 27, 28) correspondante collecte des données (15) des moyens de production (5) de la cellule de travail (2 à 4) qui, en fonction de l'adressage (25a) / de la liste d'appareils (25) / de l'affectation et/ou du standard de sécurité sont transmises vers l'extérieur au réseau (19) par la commande de cellules de travail (16, 27, 28), sans qu'un système MES et/ou ERP existant ou un logiciel de niveau hiérarchiquement supérieur n'ait à intervenir directement sur les moyens de production (5).

4. Procédé selon une des revendications 1 à 3, **caractérisé en ce que** les données (15) collectées par la commande de cellules de travail (16, 27, 28) sont mises en miroir d'une zone interne avec les moyens de production (5) dans une zone externe pour médias de niveau hiérarchiquement supérieur.

5. Procédé selon l'une des revendications précédentes, **caractérisé en ce que** la commande de cellules de travail (16, 27, 28) respective protège/sépare ou isole et surveille le transfert de données (15), de sorte qu'un transfert de données direct (15) vers les moyens de production (5) depuis l'extérieur de la cellule de travail (2 à 4) n'est possible qu'avec une activation par la commande de cellules de travail (16, 27, 28) ou une clé d'activation disponible dans le moyen de production (5) ou manuellement par le biais d'un utilisateur.

6. Procédé selon l'une des revendications précédentes, **caractérisé en ce que**, lorsqu'un moyen de production (5) est retiré de la cellule de travail (2 à 4), c'est-à-dire lorsque celui-ci est achevé par la commande de cellules de travail (16, 27, 28) respective ou le moyen de communication (8 à 10), la commande de cellules de travail (16, 27, 28) le reconnaît automatiquement, suite à quoi les fonctions associées au moyen de production (5) retiré dans cette cellule de travail (2 à 4) sont désactivées par la commande de cellules de travail (16, 27, 28).

7. Procédé selon l'une des revendications précédentes, **caractérisé en ce que** plusieurs commandes de cellules de travail (16, 27, 28) sont connectées à un logiciel de niveau hiérarchiquement supérieur, le logiciel de niveau hiérarchiquement supérieur créant une liste d'appareils ou une liste (25) avec, de préférence, une image du groupe des cellules de travail (2 à 4) individuelles ou celle-ci étant transmise par les commandes de cellules de travail (16, 27, 28) correspondantes et combinée par le logiciel de niveau hiérarchiquement supérieur en une liste d'appareils et une image du groupe (25) communes.

8. Procédé selon l'une des revendications précédentes, **caractérisé en ce qu'**un ou tous les moyens de production (5) sont conçus de manière à ce que ceux-ci s'authentifient spécialement sur la commande de cellules de travail (16, 27, 28) respective, de manière à ce que ceux-ci puissent activer un chemin d'accès directement sur eux-mêmes depuis l'extérieur, c'est-à-dire depuis le réseau externe (intranet) (19).

9. Procédé selon la revendication 8, **caractérisé en ce que** les moyens de production (5) authentifiés peuvent établir des connexions avec des appareils et/ou logiciels ou applications à l'extérieur de la cellule de travail (2 à 4).

10. Procédé selon l'une des revendications précédentes, **caractérisé en ce que** la commande de cellules de travail (16, 27, 28) correspondante empêche un accès direct aux composants ou moyens de production (5), mais n'autorise que l'accès à une image de données.

11. Procédé selon la revendication 8, **caractérisé en ce que** des moyens de production (5) non authentifiés ne peuvent pas établir de connexion vers l'extérieur ou l'intérieur par le biais de la commande de cellules de travail (16, 27, 28).

12. Installation industrielle (1) ou système de production configurés pour exécuter le procédé selon l'une des revendications 1 à 11.

13. Installation industrielle (1) ou système de production selon la revendication 12, **caractérisé en ce qu'**un module pour la protection d'une communication du réseau (19) connecté avec les composants connectés est affecté à la commande de cellules de travail (16, 27,28) correspondante.
